# EUROPEAN PATENT APPLICATION

(11) **EP 2 582 124 A1**
(43) Date of publication of application: **17.04.2013**
(21) Application number: 11791870.6
(22) Date of filing: 28.04.2011
(51) Int. Cl.: H04M 3/523

(54) **CALL CENTER SYSTEM AND ACCESSING METHOD THEREOF**

(30) Priority: 08.06.2010 CN 201010199060
(71) Applicant: ZTE Corporation, Shenzhen, Guangdong 518057 (CN)
(72) Inventor: ZHAO, Chunhui, Guangdong 518057 (CN)
(74) Representative: Zinnecker, Armin
(86) International application number: PCT/CN2011/073468
(87) International publication number: WO 2011/153879

(57) **Abstract**

The present invention discloses a call center system and an access method thereof. The method includes: a UE acquiring identification information of a user through a web interface, and determining a communication service selected by the user according to the identification information; the UE sending a queuing request of the user corresponding to the communication service to a Computer Telephony Integration (CTI) server through a queuing server; and the CTI server performing corresponding access processing according to the queuing information of the queuing request. The present invention improves the performance and usability of the system, and the user experience.

## Description

### Field of the Invention

The present invention relates to communication field, and in particular to a call center system and an access method thereof.

### Background of the Invention

At present, a call center system, with the Computer Telephony Integration (CTI) technology as the core, can provide various services, such as, a service consulting, a data query, a fault report, a complaints & suggestion, and a technical support, for many customers, and the call center system is widely applied to every public service industry, such as, a telecom operator, a bank, a civil administration/official business organ, a water/electricity/gas supplier and other public utilities, as well as a large-scale terminal goods retail enterprise, so as to become a main service means in the related enterprises and public institutions.

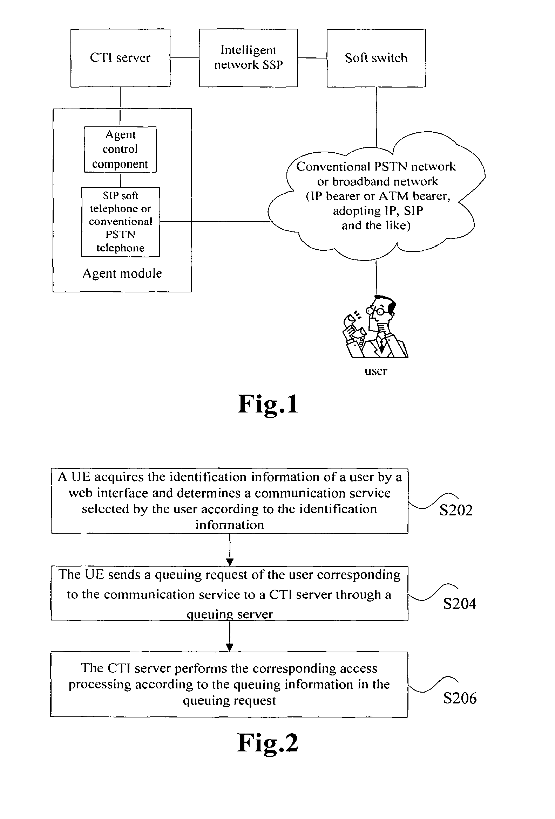

Fig. 1 is a schematic diagram of a call center system according to the related technologies. As shown in Fig.1, the call center system consists of the following components:
a CTI server, i.e., a core module of the conventional call center architecture;
a soft switch, i.e., a core device of a telecommunication network, which is configured to control and process the whole call flow and control the connection and disconnection of a speech path bearer network;
an intelligent network Service Switching Point (SSP), i.e., an intelligent network service access point, which is an intermediate node between an intelligent network and a soft switch to process the interaction between both sides;
an control component, i.e., an interface module for interaction between an agent and a CTI server, which communicates with the CTI server by the standard Telephony Services Application Programming Interface (TSAPI) protocol and its extension, and can be called by an agent program in the form of a control component (such as, an ActiveX control component); and
a Session Initiation Protocol (SIP) soft telephone or a conventional Public Switched Telephone Network (PSTN) telephone, i.e., a call device for an agent, which is a common conventional PSTN telephone relative to the conventional PSTN, and may be a software analog telephone born by the Internet Protocol (IP) and registered to the soft switch by the SIP relative to the Next Generation Network (NGN) broadband network.

In the call center system, the workflow of each module can be as follows: a user accesses a conventional PSTN or a new NGN broadband telecommunication network by a telecommunication network access device (born in the IP mode or the Asynchronous Transfer Mode (ATM), and communicating by a broadband protocol, such as IP/SIP), and calls the core device soft switch of the telecommunication network (corresponding to the switch of the conventional network); then, the soft switch transfers to the corresponding intelligent network SSP for processing according to its corresponding intelligent network service (wherein, the call center is a typical intelligent network service); the SSP notifies the CTI server of the call information; and the CTI server performs the queuing processing to acquire an idle agent to make a call with the user.

However, the inventor finds that the call center system in the related arts is basically limited to the telephone network voice accessing way, so that the interaction way lacks diversity, and the system processing is very fussy for some complex operation. Although there is also a network access service way in the related arts, it is generally only limited to the self-service of the user, and lacks instant interaction and communication with a customer service agent, so that the user has a poor satisfaction degree.

### Summary of the Invention

The main objective of the present invention is to provide a call center system and an access solution thereof, at least solving the problem that the interaction way between a user and a customer service agent is limited so as to affect the system efficiency and the satisfaction degree of the user in the call center system in the related arts.

To achieve the objective, in one aspect, the present invention provides an access method for a call center system.

The access method for the call center system includes: a UE acquiring identification information of a user through a web interface, and determining a communication service selected by the user according to the identification information; the UE sending a queuing request of the user corresponding to the communication service to a Computer Telephony Integration (CTI) server through a queuing server; and the CTI server performing corresponding access processing according to the queuing information of the queuing request.

The communication service includes at least one of: an instant messaging service and a call service.

When the UE determines that the communication service selected by the user is an instant messaging service according to the identification information, the step of the CTI server performing the corresponding access processing according to the queuing information of the queuing request comprises: the CTI server determining an idle agent and/or an idle customer service agent capable of processing the instant messaging service according to the queuing information of the queuing request, and sending the instant messaging system account of the agent and/or that of the customer service agent to the web interface of the UE.

After the step of the CTI server sending the instant messaging system account of the agent and/or that of the customer service agent to the web interface of the UE, the method further comprises: the web interface initiating a web session request to the agent through an instant messaging server with the instant messaging system account of the agent and/or that of the customer service agent; the instant messaging server receiving the web session request, and notifying the CTI server that the agent has entered the web access service state when the authentication for the web session request is passed; and the CTI server updating access state of the agent.

The instant messaging service comprises at least one of: a text chatting, a network voice chatting, a network video chatting, a whiteboard, an application sharing, a remote assistance and a video conference.

When the UE determines that the communication service selected by the user is a call service according to the identification information, the step of the CTI server performing the corresponding access processing according to the queuing information of the queuing request comprises: the CTI server determining an idle agent and/or an idle customer service agent capable of processing the call service according to the queuing information of the queuing request, and notifying the web interface of the telephone number of the agent and/or the code of the customer service agent; and the web interface sending a call request to the call server with the telephone number of the agent and/or the code of the customer service agent.

After the step of the CTI server performing the corresponding access processing according to the queuing information in the queuing request, the method further comprises: the UE acquiring a command, which indicates that the user switches the communication service, by the web interface, and determining the communication service switched according to the command.

The step of acquiring the identification information through the web interface comprises: acquiring the identification information of the user by an internet browser or a Web access control component embedded in an application.

The identification information comprises at least one of: an instant messaging system account of user, telephone number of user, and a call server address; and the queuing information comprises at least one of: the identification information, a service type of user, and a processing capability of the agent capable of processing the communication service.

In order to implement the objective, in another aspect, the present invention further provides a call center system.

The call center system comprises: a UE, a queuing server and a CTI server, wherein the UE, configured to acquire identification information of a user through a web interface, determine a communication service selected by the user according to the identification information, and send a queuing request of the user corresponding to the communication service to the CTI server by the queuing server; and the CTI server, configured to perform corresponding access processing according to the queuing information of the queuing request.

The CTI server is further configured to determine an idle agent and/or an idle customer service agent capable of processing the instant messaging service according to the queuing information of the queuing request, and send the instant messaging system account of the agent and/or that of the customer service agent to the web interface of the UE when the UE determines that the communication service selected by the user is an instant messaging service.

The call center system further comprises: an instant messaging server, configured to receive a web session request initiated by the web interface of the UE with the instant messaging system account of the agent and/or that of the customer service agent, authenticate the web session request, and notify the CTI server that the agent has entered the web access service state when the authentication is passed; and the CTI server is further configured to update access state of the agent.

The UE is further configured to acquire a command, which indicates that the user switches the communication service, by the web interface, and determine the communication service switched according to the command.

The web interface includes at least one of: an internet browser; and a web access control component embedded in an application.

Through the present invention, by means of combining voice access call with instant messaging over internet, the problem that the interaction way between the user and the customer service agent is limited so as to affect the system efficiency and satisfaction degree of the user in the call center system of the related arts is solved, and the performance and usability of the system, and the user experience are improved.

### Brief Description of the Drawings

The drawings illustrated here are to provide further understanding of the present invention and constitute one part of the application, and the exemplary embodiments of the present invention and the explanations thereof are intended to explain the present invention, instead of improperly limiting the present invention. In the drawings:
Fig. 1 is a schematic diagram of a call center system according to the related arts;
Fig. 2 is a flowchart of an access method for a call center system according to an embodiment of the present invention;
Fig. 3 is a block diagram of the structure of a call center system according to an embodiment of the present invention;
Fig. 4 is a block diagram of the structure of a call center system according to a preferred embodiment of the present invention;
Fig. 5 is a diagram of a call center system according to a preferred embodiment of the present invention; and
Fig. 6 is a schematic diagram of a user access flow according to a preferred embodiment of the present invention.

### Detailed Description of the Embodiments

The present invention will be described below with reference to the drawings and embodiments in detail. It should be noted that, in the case of no conflict, the embodiments of the present invention and features therein can be combined with each other.

Fig. 2 is a flowchart of an access method for a call center system according to an embodiment of the present invention. As shown in Fig.2, the method includes the following steps.

Step S202: a UE acquires the identification information of a user by a web interface and determines the communication service selected by the user according to the identification information.

Step S204: the UE sends a queuing request of the user corresponding to the communication service to a CTI server through a queuing server.

Step S206: the CTI server performs the corresponding accessing processing according to the queuing information in the queuing request.

Through the embodiment, by combining voice access call with instant messaging over internet, the problem the interaction way between the user and the customer service agent is limited so as to affect the system efficiency and the satisfaction degree of the user in the call center system of the related arts is solved, and the performance and usability of the system, and the user experience are improved.

Preferably, the communication service can include at least one of: an instant messaging service and a call service. Thereby, the usability of the system can be improved.

Preferably, when the UE determines that the communication service selected by the user is the instant messaging service (such as, a text, a audio, a video chatting based on a web network) according to the identification information, in Step S206, the CTI server can determine an idle agent and/or an idle customer service agent capable of processing the instant messaging service according to the queuing information in the queuing request, and send the instant messaging system account of the agent and/or that of the customer service agent to the web interface of the UE. In the method, an idle agent or an idle customer service agent can be assigned for the user selecting the instant messaging service, so as to improve the system processing capability.

Preferably, after the CTI server sends the instant messaging system account of the agent and/or that of the customer service agent to the web interface of the UE, the web interface can initiate a web session request to the agent through an instant messaging server with the instant messaging system account of the agent and/or that of the customer service agent. The instant messaging server receives the web session request, and notifies the CTI server that the agent has entered the web access service state when the authentication for the web session request is passed; and the CTI server updates access state of the agent. The method can increase the effectiveness and efficiency of the system.

Preferably, the instant messaging service includes at least one of: a text chatting, a network voice chatting, a network video chatting, a whiteboard, an application sharing, a remote assistance and a video session. The method is simple to implement and strong in operability.

Preferably, when the UE determines that the communication service selected by the user is the call service (for example, a telecommunication network accesses voice and a video call) according to the identification information, in Step S206, the CTI server determines an idle agent and/or an idle customer service agent capable of processing the call service according to the queuing information of the queuing request, and notifies the web interface of the telephone number of the agent and/or the code of the customer service agent. The web interface sends a call request to the call server with the telephone number of the agent and/or the code of the customer service agent. By the method, the user accesses the call center system by the web interface through the call server, so that the user can interact with the customer service agent in an internet way, and the user experience is improved.

Preferably, after Step S206, the UE acquires a command which indicates that the user switches the communication service by the web interface, and determines the communication service to which the communication service is switched according to the command.

The preferred embodiment implements the switching between communication services for the user (i.e., switching between the instant messaging service and the call service), so as to increase the flexibility of the system.

Preferably, the step of the web interface acquiring the identification information of the user includes: acquiring the identification information of the user by a Web access control component embedded in an internet browser or a web access control component. The method is simple to implement and strong in operability.

Preferably, the identification information includes at least one of: a instant messaging system account of user, a telephone number of user, and a call server address; and the queuing information includes at least one of: the identification information, a service type of user, and a processing capability of the agent capable of processing the communication service. By the method, the system can effectively identify the processed object, so as to improve the efficiency of the system.

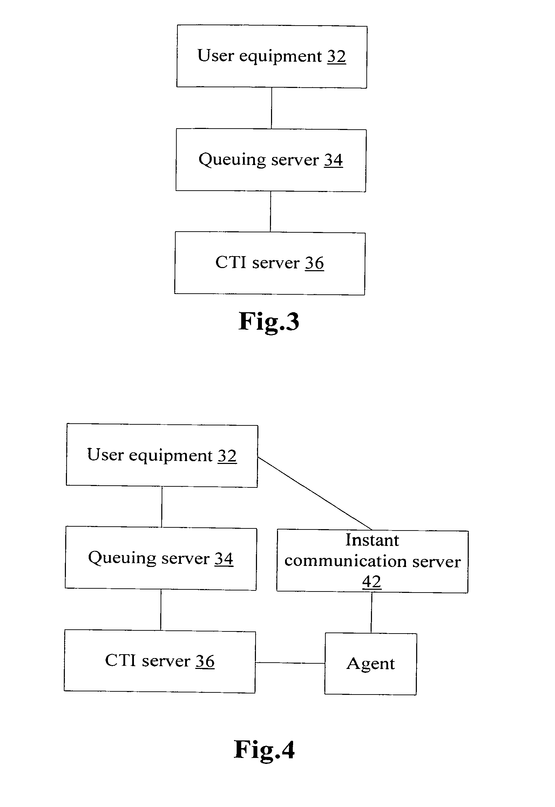

Fig. 3 is a block diagram of the structure of a call center system according to an embodiment of the present invention. As shown in Fig.3, the call center system includes a UE 32, a queuing server 34 and a CTI server 36, wherein the UE 32 is coupled to the queuing server 34 and configured to acquire the identification information of a user through a web interface, determine the communication service selected by the user according to the identification information, and send a queuing request of the user corresponding to the communication service to the CTI server 36 through the queuing server 34; and the CTI server 36 is coupled to the queuing server 34 and configured to perform the corresponding access processing according to the queuing information of the queuing request.

Through the embodiment, by means of combining voice access call with instant messaging over internet, the problem that the interaction way between the user and the customer service agent is limited so as to affect the system efficiency and satisfaction degree of the user in the call center system of the related arts is solved, and the performance and usability of the system, and the user experience are improved.

Preferably, the CTI server 36 is further configured to determine an idle agent and/or an idle customer service agent capable of processing the instant messaging service according to the queuing information of the queuing request, and send the instant messaging system account of the agent and/or that of the customer service agent to the web interface of the UE 32 when the UE 32 determines that the communication service selected by the user is the instant messaging service.

It should be noted that the call center system of the embodiment can support the accessing of a computer internet (such as an internet and a web) or the accessing of a conventional telecommunication network at the same time and also support various interaction ways between an accessing user and an customer service agent, such as, network voice/video chatting, whiteboard, application sharing, remote assistance and video session.

Fig. 4 is a block diagram of the structure of a call center system according to a preferred embodiment of the present invention. As shown in Fig.4, the system further includes: an instant messaging server **42** which is coupled to the UE **32** and configured to receive the web session request initiated by the web interface of the UE **32** with the instant messaging system account of the agent and/or that of the customer service agent, authenticate the web session request, and notify the CTI server **36** that the agent has entered the web access service state when the authentication is passed; and the CTI server **36** is further configured to update the access state of the agent.

Preferably, the UE **32** is further configured to acquire a command which indicates that the user switches the communication service by the web interface, and determine the communication service to which the communication service is switched according to the command.

Preferably, the web interface includes at least one of: an internet browser; and a web access control component embedded in an application.

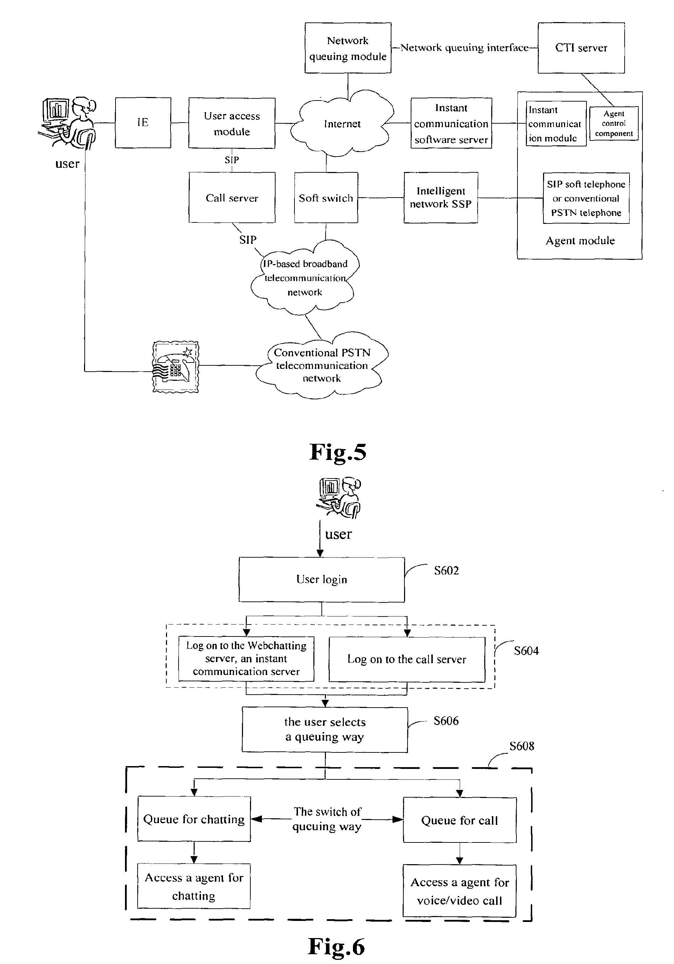

Fig. 5 is a diagram of a call center system according to a preferred embodiment of the present invention. As shown in Fig.5, the left side is a user side accessing by a web and the right side is a customer service agent, wherein the user side is registered based on a web browser and a web access control component, and then the web access control component is embedded to a browser for calling. The agent side is connected to a CTI server by an agent control component, and the agent side connected to an instant messaging server by an instant messaging control component, and is registered to a call server through SIP protocol by the SIP-supported soft telephone. The system can include the following.

A web browser, i.e., an internet browser on a user terminal computer, such as, Internet Explorer (IE), and Firefox.

A user access module, i.e., a module for the calling of a web browser or other web applications, which may be embedded into the web browser by a control component (supporting but not limited to an ActiveX control component), and support multiple accessing ways in the implementation process: (1) the user access module may be connected with a network queuing module by a web in a Browser/Server (B/S) way to queue to a CTI server to acquire the information of an idle agent (including the telephone number of the agent, the instant messaging system account, and the like); (2) the user access module may be connected to a call server by an IP-based broadband telecommunication network to acquire the telephone number of the idle agent and other information, and then initiate a call request for a corresponding number to a soft switch; and (3) the user access module provides an interface which is connected to an instant messaging software server by the web interface to interact media with the agent obtained by queuing (such as, by a method and an event), including, text chatting, voice chatting, video chatting, whiteboard, application program sharing, remote assistance, video session, and other functions the instant messaging system can provide (not limited to the types listed above);

A network queuing module, i.e., a network queuing interface which may provide a link to a CTI server for queuing for an agent, and support the chatting queuing of web network and the calling queuing of telecommunication network (including broadband IP telecommunication network, and conventional PSTN telecommunication network) at the same time, wherein for the conventional PSTN telecommunication network, the CTI server can be notified of the telephone number information of the user registered to the PSTN during the queuing, and the telephone may be called back (the fixed-line phone connected with the conventional PSTN telecommunication network in Fig. 5).

An instant messaging server, i.e., a network server which may provide an instant messaging service, and may be either a public instant messaging system (such as QQ and MSN), or a self-developed instant messaging system when implemented.

A call server, i.e., a call server based on the telecommunication network, to which a user is registered by the soft telephone supporting the SIP and the SIP.

An agent module which can include: an instant messaging module which is configured to communicate with the instant messaging server, an agent control component which is configured to communicate with the CTI server, and an SIP soft telephone or a conventional PSTN telephone, i.e., a call device for the agent.

It can be seen that the system includes three basic systems: a network access queuing system connected to the CTI server by the network queuing interface between the network queuing module and the CTI server, an instant messaging system based on an instant messaging server, and a call center customer service platform system based on the soft switch, intelligent network service access point, SIP soft telephone and agent control component. The three are relatively independent, and can be combined and applied flexibly and organically, for example, they can be either combined with an original call center platform by the instant messaging system existed in the internet or combined with a call center platform by the instant messaging system developed thereby, so as to implement low-cost functional improvement by combining the instant messaging tool existed in the internet with the existed call center platform system.

The embodiment of the CTI server improves the customer experience, usability, and the interaction way between the customer service agent and the user.

Fig. 6 is a schematic diagram of a user access flow according to a preferred embodiment of the present invention. As shown in Fig.6, the flow of performing network chatting by a web access call center can include the following steps.

Step S602: the user inputs own instant messaging system account at first to log on to an instant messaging system server by an internet browser or other web access control components with embedded network applications. Meanwhile, the user may input own telephone number and call server address to log on to the call server.

Step S604: the user is connected to a network queuing module by a web access module, and transmits queuing information to a CTI server for queuing by an internet (or the HTTP tunnel technology) to wait for the CTI server for queuing result. It should be noted that the queuing information may include the instant messaging system account of the user, the agent skill needed by the user (i.e., what service the agent can provide), and the like.

Step S606: the user can select the chatting queuing way or call queuing way. After the chatting queuing is successful, the user may also select to continue call queuing, vice versa. That is to say, after the chatting queuing is successful, the same agent can be further specified for call queuing; or, after the call queuing, the same agent can be further specified for chatting queuing. For example, an application scenario is: a user chats with an agent by a network, and then finds that the text chatting cannot explain very well and wants to explain by voice call, at that moment, a call queuing can be initiated and the current chatting agent can be specified during the queuing, i.e., a voice call may be made with the same agent.

Step S608: in the case of chatting queuing, firstly, the CTI server judges whether the user is authorized by the service, whether the current system supports the web access way, and the like according to the information of the queuing request. If so, the instant messaging system account of an idle customer service agent supporting the service skill can be assigned, the queuing result is returned to the user by a network queuing module and a web access control component, and the agent control component is notified of the user account corresponding to the started web access service. Secondly, a web access module initiates a session starting request to the account, the instant messaging control component of the customer service agent receives the request and then forwards it to the agent control component, and the agent control component determines that the web session request is legal (by comparing it with the previous message that the CTI server notifies to start the web access service) and then accepts the session request. After accepting the session request, the agent notifies the CTI server that he has entered the web access service state, the CTI server refreshes the state of the agent to the network chatting state and notifies other modules of the call center platform (such as, a log server) to perform the corresponding processing, such as, recording the service log and the session starting time. Then, both sides can directly take own accounts in the instant messaging system as identifiers to start the network chatting.

In the case of a call queuing, firstly, the CTI server judges whether the user is authorized by the service according to the information of the queuing request, if so, an idle customer service agent with the service skill can be assigned, and the telephone number, code and other information of the customer service agent are returned to the queuing result to the user by the network queuing module, and the user web access module. Secondly, after acquiring the telephone number information of the customer service agent in the queuing result, the user initiates a call to a call server and fills in the telephone number of the customer service agent to use it as the called number; the call server initiates a call signalling to a soft switch; the soft switch transfers to the corresponding intelligent network SSP for processing according to its corresponding intelligent network service (the call center is a typical intelligent network service); and the SSP notifies an Automatic Call Distributor (ACD) (the call distributor in a call center model) of the call information to call the CTI and connect the corresponding agent to make a call with the user.

In the implementation, other extended services supported by the instant messaging system can be continued between the user and the agent, such as, a video chatting, a video session, a whiteboard, an application sharing, and a remote assistance. Thereby, the customer service agent can serve for the accessing user by multiple interaction ways.

In the embodiments of the present invention, by means of combining voice access interaction with the advantages of instant messaging over internet, such as convenient operation, intuitiveness and diversity, the user can access the agent of the call center by the internet, or communicate with the customer service agent by a network chatting (including a text, a video and a audio chatting), a whiteboard, a application sharing, a remote assistance, a video session and other ways, so as to improve the user experience of the system (such as, assisting the user to solve the fault of the computer by the remote assistance, and making a simple map by the whiteboard to guide the user to reach the designated location).

It should be noted that the technical solution of the present invention is managed based on the call center platform and is different from the network point-to-point instant messaging system not controlled by the centralized platform at all, and similar to the current QQ, MSN and other ways. The call center system of the embodiments of the present invention inherits the management functions of the call center platform, such as, queuing and assignment, authority management, data statistics, quality monitoring, call recording, and service feedback implemented by the customer service agent according to the skill and idle condition, and can support mass telephone traffic, wherein the session between the user and customer service agent is under the control of the call center platform.

To sum up, the technical solution of the present invention, i.e., the call center customer service system based on the Next Generation Network (NGN), well combines the internet-based online chatting with the voice/video call based on the telecommunication network, may log on to an online chatting server and a CTI server at the same time, and performs the queuing for a voice/video call in the web access way (such as text/audio/video chatting based on a web network) and in the telecommunication network access way respectively. After the queuing is completed, the user can access the agent to perform text/audio/video chatting based on the web network or the voice/video call based on the telecommunication network with the agent. Furthermore, the two ways can be switched easily. In addition, in the mode of text chatting, which is a non-exclusive contact way, a customer service agent may further serve for multiple customers at the same time, so as to improve the customer service support efficiency.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the present invention are all included in the scope of the protection of the present invention.

## Claims

1. An access method for a call center system, **characterized by** comprising:
a User Equipment (UE) acquiring identification information of a user through a web interface, and determining a communication service selected by the user according to the identification information;
the UE sending a queuing request of the user corresponding to the communication service to a Computer Telephony Integration (CTI) server through a queuing server; and
the CTI server performing corresponding access processing according to the queuing information of the queuing request.

2. The method according to Claim 1, **characterized in that** the communication service comprises at least one of: an instant messaging service and a call service.

3. The method according to Claim 1, **characterized in that** when the UE determines that the communication service selected by the user is an instant messaging service according to the identification information, the step of the CTI server performing the corresponding access processing according to the queuing information of the queuing request comprises:
the CTI server determining an idle agent and/or an idle customer service agent capable of processing the instant messaging service according to the queuing information of the queuing request, and sending the instant messaging system account of the agent and/or that of the customer service agent to the web interface of the UE.

4. The method according to Claim 3, **characterized in that** after the step of the CTI server sending the instant messaging system account of the agent and/or that of the customer service agent to the web interface of the UE, the method further comprises:
the web interface initiating a web session request to the agent through an instant messaging server with the instant messaging system account of the agent and/or that of the customer service agent;
the instant messaging server receiving the web session request, and notifying the CTI server that the agent has entered the web access service state when the authentication for the web session request is passed; and
the CTI server updating access state of the agent.

5. The method according to any one of Claims 1 to 4, **characterized in that** the instant messaging service comprises at least one of: a text chatting, a network voice chatting, a network video chatting, a whiteboard, an application sharing, a remote assistance and a video conference.

6. The method according to Claim 1, **characterized in that** when the UE determines that the communication service selected by the user is a call service according to the identification information, the step of the CTI server performing the corresponding access processing according to the queuing information of the queuing request comprises:
the CTI server determining an idle agent and/or an idle customer service agent capable of processing the call service according to the queuing information of the queuing request, and notifying the web interface of the telephone number of the agent and/or the code of the customer service agent; and
the web interface sending a call request to the call server with the telephone number of the agent and/or the code of the customer service agent.

7. The method according to any one of Claims 1 to 4, or 6, **characterized in that** after the step of the CTI server performing the corresponding access processing according to the queuing information in the queuing request, the method further comprises:
the UE acquiring a command, which indicates that the user switches the communication service, by the web interface, and determining the communication service switched according to the command.

8. The method according to Claim 7, **characterized in that** the step of acquiring the identification information through the web interface comprises:
acquiring the identification information of the user by an internet browser or a Web access control component embedded in an application.

9. The method according to Claim 7, **characterized in that** the identification information comprises at least one of: an instant messaging system account of user, telephone number of user, and a call server address; and the queuing information comprises at least one of: the identification information, a service type of user, and a processing capability of the agent capable of processing the communication service.

10. A call center system, comprising a User Equipment (UE), a queuing server and a Computer Telephony Integration (CTI) server, **characterized by**,
the UE, configured to acquire identification information of a user through a web interface, determine a communication service selected by the user according to the identification information, and send a queuing request of the user corresponding to the communication service to the CTI server by the queuing server; and
the CTI server, configured to perform corresponding access processing according to the queuing information of the queuing request.

11. The system according to Claim 10, **characterized in that** the CTI server is further configured to determine an idle agent and/or an idle customer service agent capable of processing the instant messaging service according to the queuing information of the queuing request, and send the instant messaging system account of the agent and/or that of the customer service agent to the web interface of the UE when the UE determines that the communication service selected by the user is an instant messaging service.

12. The system according to Claim 11, **characterized by** further comprising:
an instant messaging server, configured to receive a web session request initiated by the web interface of the UE with the instant messaging system account of the agent and/or that of the customer service agent, authenticate the web session request, and notify the CTI server that the agent has entered the web access service state when the authentication is passed; and
the CTI server is further configured to update access state of the agent.

13. The system according to any one of Claims 10 to 12, **characterized in that** the UE is further configured to acquire a command, which indicates that the user switches the communication service, by the web interface, and determine the communication service switched according to the command.

14. The system according to Claim 13, **characterized in that** the web interface comprises at least one of:
an internet browser; and
a web access control component embedded in an application.
